# EUROPEAN PATENT APPLICATION

(11) **EP 3 920 095 A1**
(43) Date of publication of application: **08.12.2021**
(21) Application number: 19915297.6
(22) Date of filing: 15.02.2019
(51) Int. Cl.: G06K 9/62

(54) **IMAGE PROCESSING METHOD AND APPARATUS, MOVEABLE PLATFORM, UNMANNED AERIAL VEHICLE AND STORAGE MEDIUM**

(71) Applicant: SZ DJI Technology Co., Ltd., Shenzhen, Guangdong 518057 (CN)
(72) Inventor: RENG, Chuangjie, Shenzhen, Guangdong 518057 (CN); LI, Xinchao, Shenzhen, Guangdong 518057 (CN); LI, Sijin, Shenzhen, Guangdong 518057 (CN)
(74) Representative: Goddar, Heinz J.
(86) International application number: PCT/CN2019/075171
(87) International publication number: WO 2020/164092

(57) **Abstract**

An image processing method, an image processing device, a movable platform, an unmanned aerial vehicle, and a storage medium are provided. The method includes: obtaining target image data, the target image data including a target image and depth data corresponding to various pixels in the target image; processing the target image data to obtain a confidence level feature map of semantics of the target image data; and based on the confidence level feature map, determining a position of a target region in the target image data. Through the embodiments, the confidence level feature map is automatically generated, thereby achieving rapidly and efficiently recognizing the target region in the target image data.

## Description

### TECHNICAL FIELD

The present disclosure relates to the technical field of controls and, more particularly, to an image processing method, a device, a movable platform, an unmanned aerial vehicle (UAV), and a storage medium.

### BACKGROUND

At present, the development of movable platforms (e.g., UAVs, unmanned automobiles, unmanned boats) becomes more and more important, and moves more and more rapidly. Applications of the movable platforms are numerous. For example, the UAVs are used to carry photographing devices. The UAVs are widely used in aerial photographing technology. However, the conventional aerial photographing technology of UAVs is unable to automatically identify the number of target objects in a certain image area of a captured image, and relies on manual control to determine the number of the target objects in the certain image area of the captured image. The manual control method is cumbersome and inefficient. Thus, how to more efficiently and more rapidly identify the target objects has become a key point for research.

### SUMMARY

The present disclosure provides an image processing method, an image processing device, a movable platform, an unmanned aerial vehicle, and a storage medium for rapidly and efficiently recognizing a target region in target image data.

In a first aspect, the disclosure provides an image processing method. The method includes: obtaining target image data, the target image data including a target image and depth data corresponding to various pixels in the target image; processing the target image data to obtain a confidence level feature map of semantics of the target image data; and based on the confidence level feature map, determining a position of a target region in the target image data.

In a second aspect, the disclosure provides another image processing method. The method includes: obtaining target image data, the target image data including a target image and depth data corresponding to various pixels in the target image; processing the target image data to obtain a confidence level feature map of semantics of the target image data; and based on the confidence level feature map, determining a quantity of target objects having an identical semantic type in the target image data.

In a third aspect, the disclosure provides an image processing device. The device includes a memory storing program instructions and a processor configured to execute the program instructions stored in the memory to: obtain target image data, the target image data including a target image and depth data corresponding to various pixels in the target image; process the target image data to obtain a confidence level feature map of semantics of the target image data; and based on the confidence level feature map, determine a position of a target region in the target image data.

In a fourth aspect, the disclosure provides another image processing device. The device includes a memory storing program instructions and a processor configured to execute the program instructions stored in the memory to: obtain target image data, the target image data including a target image and depth data corresponding to various pixels in the target image; process the target image data to obtain a confidence level feature map of semantics of the target image data; and based on the confidence level feature map, determine a quantity of target objects having an identical semantic type in the target image data.

In a fifth aspect, the disclosure provides a movable platform. The movable platform includes a memory storing program instructions and a processor configured to execute the program instructions stored in the memory to: obtain target image data, the target image data including a target image and depth data corresponding to various pixels in the target image; process the target image data to obtain a confidence level feature map of semantics of the target image data; and based on the confidence level feature map, determining a position of a target region in the target image data.

In a sixth aspect, the disclosure provides another movable platform. The movable platform includes a memory storing program instructions and a processor configured to execute the program instructions stored in the memory to: obtain target image data, the target image data including a target image and depth data corresponding to various pixels in the target image; process the target image data to obtain a confidence level feature map of semantics of the target image data; and based on the confidence level feature map, determine a quantity of target objects having an identical semantic type in the target image data.

In a seventh aspect, the disclosure provides an unmanned aerial vehicle (UAV). The UAV includes a body; a propulsion system disposed at the body and configured to supply a propulsion force; and the image processing device in the third aspect or the fourth aspect described above.

In an eighth aspect, the disclosure provides a computer-readable medium storing a computer program. When being executed by a processor, the computer program implements the image processing method in the first aspect or the second aspect described above.

In the embodiments of the present disclosure, the image processing device may obtain the target image data. The target image data includes the target image and the depth data corresponding to various pixels in the target image. The target image data is processed to obtain the confidence level feature map of the semantics of the target image data. Based on the confidence level feature map, the position of the target region in the target image data is determined. Through the embodiments, the target region in the target image data is rapidly and efficiently recognized, thereby improving image processing efficiency.

### BRIEF DESCRIPTION OF THE DRAWINGS

To more clearly illustrate the technical solution in embodiments of the present disclosure or in the existing technologies, the accompanying drawings used in the description of the disclosed embodiments are briefly described hereinafter. The drawings described below are merely some embodiments of the present disclosure. Other drawings may be derived from such drawings by a person with ordinary skill in the art without creative efforts and may be encompassed in the present disclosure.
FIG. 1 is a schematic structural diagram of an image processing system according to embodiments of the present disclosure.
FIG. 2 is a schematic flowchart of an image processing method according to embodiments of the present disclosure.
FIG. 3A is a schematic diagram of a confidence level feature map according to embodiments of the present disclosure.
FIG. 3B is a schematic diagram of an interface of target image data according to embodiments of the present disclosure.
FIG. 4 is a schematic diagram of identifying target objects according to embodiments of the present disclosure.
FIG. 5 is a schematic flowchart of another image processing method according to embodiments of the present disclosure.
FIG. 6 is a schematic diagram of reference frame selection in a method for three-dimensional (3D) reconstruction of a target scene according to embodiments of the present disclosure.
FIG. 7 is a schematic structural diagram of an image processing device according to embodiments of the present disclosure.
FIG. 8 is a schematic structural diagram of another image processing device according to embodiments of the present disclosure.

### DETAILED DESCRIPTION OF THE EMBODIMENTS

Technical solutions in the embodiments of the present disclosure will be clearly and completely described below with reference to the accompanying drawings. It will be appreciated that the described embodiments are some rather than all of the embodiments of the present disclosure. Other embodiments obtained by those having ordinary skills in the art on the basis of the described embodiments without inventive efforts should fall within the scope of the present disclosure.

Embodiments of the present disclosure will be described in detail in connection with the drawings. Under circumstances of no conflict, the following embodiments and features in the embodiments may be combined with each other.

The image processing method provided by the embodiments of the present disclosure may be executed by an image processing system. The image processing system includes an image processing device and a movable platform. In some embodiments, the image processing device may be disposed at a load (e.g., a photographing device, an infrared sensing device, a surveying instrument, etc.) of the movable platform (e.g., an unmanned aerial vehicle or UAV). In some other embodiments, the imaging processing device may also be disposed at other movable devices, such as an autonomously moving robot, an unmanned automobile, an unmanned boat, etc. In some embodiments, the image processing device may be a component of the movable platform, that is, the movable platform includes the image processing device. In some other embodiments, the image processing device may be spatially independent of the movable platform. The image processing device consistent with the embodiments of the present disclosure will be described in detail with reference to the accompanying drawings.

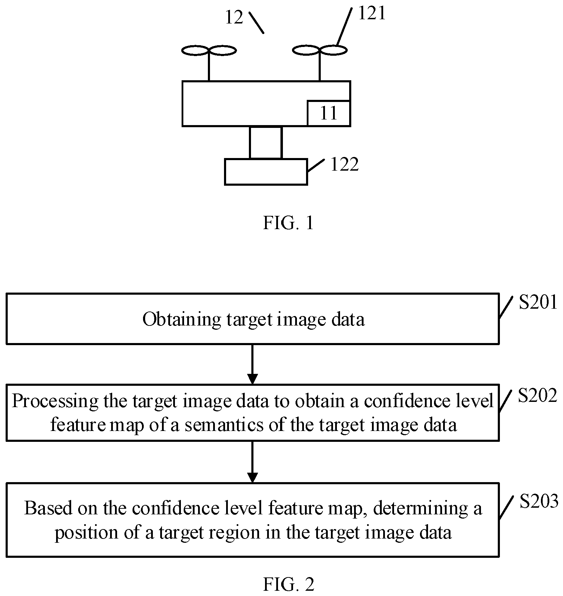

FIG. 1 is a schematic structural diagram of an image processing system according to embodiments of the present disclosure. As shown in FIG. 1, the image processing system includes an image processing device 11 and a movable platform 12. The image processing device 11 may be a control terminal of the movable platform 12. For example, the processing device 11 may be one or more of a remote-controller, a smart phone, a tablet computer, a laptop computer, a ground station, a wearable device (e.g., a watch, a bracelet). The movable platform 12 may include a movable apparatus such as an autonomously moving robot, an unmanned automobile, or an unmanned boat. The movable platform 12 includes a propulsion system 121 configured to propel the movable platform 12 to move. The movable platform 12 further includes a photographing device 122 disposed at a main body of the movable platform 12. The photographing device 122 is configured to capture images or videos while the movable platform 12 is moving, and includes, but is not limited to, a multi-spectral imaging device, a hyper-spectral imaging device, a visible light camera, and an infrared camera, etc.

In some embodiments, the image processing device 11 in the image processing system may obtain target image data from the photographing device 122 mounted at the movable platform 12, process the target image data to obtain a confidence level feature map of a semantics of the target image data, and determine a position of a target region in the target image data based on the confidence level feature map. In some embodiments, the target image data includes a target image and depth data corresponding to various pixels in the target image.

The image processing method applied to the movable platform will be described below with reference to the accompanying drawings.

FIG. 2 is a schematic flowchart of an image processing method according to embodiments of the present disclosure. The method may be executed by the image processing device, which has been described in detail. Specifically, the method includes the following processes.

At S201, target image data is obtained.

In some embodiments, the image processing device may obtain the target image data. In some embodiments, the target image data includes the target image and the depth data corresponding to various pixels in the target image. In some embodiments, the target image data may be obtained based on the target image and the depth data obtained through photographing by the photographing device mounted at the movable platform. In some embodiments, the target image includes, but is not limited to, a top view image.

In some embodiments, the target image data includes a color image. In some embodiments, the target image data includes the color image and the depth data corresponding to the color image. In some embodiments, the target image data includes an orthoimage. In some embodiments, the target image data includes the orthoimage and the depth data corresponding to the orthoimage.

At S202, the target image data is processed to obtain a confidence level feature map of a semantics of the target image data.

In some embodiments, the image processing device may process the target image data to obtain the confidence level feature map of the semantics of the target image data.

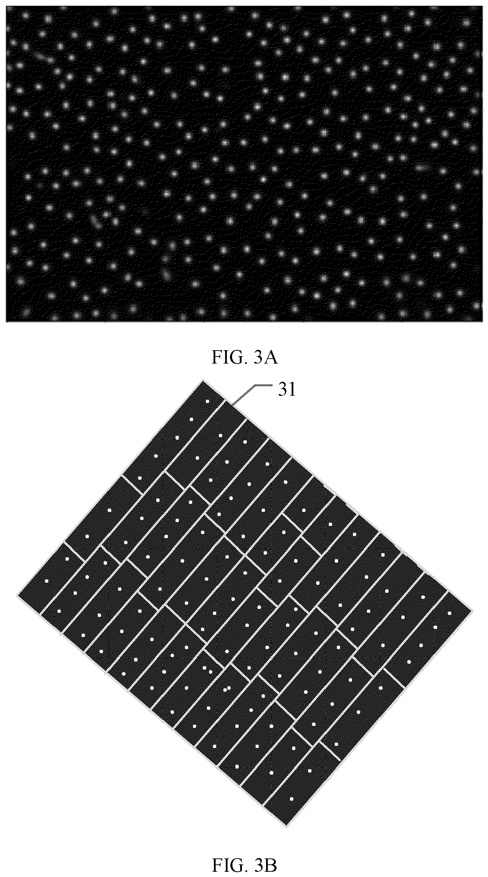

In one embodiment, when the image processing device processes the target image data to obtain the confidence level feature map of the semantics of the target image data, the image processing device may process the target image data based on a semantics recognition model to obtain a semantic type and a semantic confidence level of each pixel in the target image data, and to generate point cloud data including the semantic type and the semantic confidence level based on position data and height data corresponding to the target image data, and the semantic type and the semantic confidence level of each pixel in the target image data. The image processing device may further generate the confidence level feature map as shown in FIG. 3A based on the point cloud data including the semantic type and the semantic confidence level. As shown in FIG. 3A, the confidence level feature map includes the point cloud data including the semantic type and the semantic confidence level.

FIG. 3B is a schematic diagram of an interface of target image data according to embodiments of the present disclosure. Based on the position data and the height data of the target image data 31, and the semantic type and the semantic confidence level of each pixel shown in FIG. 3B, the image processing device generates the point cloud data including the semantic type and the semantic confidence level shown in FIG. 3A. For example, assume that the position data and the height data of the target image data 31 are *m* and *h,* respectively, and the semantic types and the semantic confidence levels corresponding to n pixels in the target image data 31 are K₁, K₂, ..., Kₙ, respectively. Based on the position data *m*, the height data *h,* and the semantic types and the semantic confidence levels, K₁, K₂, ..., Kₙ, corresponding to *n* pixels in the target image data 31, the image processing device generates the point cloud data including the semantic type and the semantic confidence level shown in FIG. 3A.

In some embodiments, the point cloud data and the confidence level feature map include a plurality of pieces of point data. Each piece of point data includes the position data, the height data, and multiple semantic types with different semantic confidence levels. Each piece of point data in the point cloud data corresponds to each pixel in the target image data. In some embodiments, the point cloud data in the confidence level feature map includes a plurality of circles generated through a Gaussian distribution. Generation of the confidence level feature map through Gaussian distribution improves stability of the confidence level feature map. The embodiments of the present disclosure do not limit a correspondence relationship between the point cloud data and the pixels in the target image data. Each piece of point cloud data may one-to-one correspond to each pixel in the image data. Each piece of point cloud data may also correspond to multiple pixels. In this case, the semantics of the point cloud data is determined by a clustering result of the multiple pixels.

In some embodiments, the semantics recognition model may be a convolutional neural network (CNN). The architecture of the CNN model includes an input layer, a convolution layer, an excitation layer, and a pooling layer. The neural network model may include a plurality of subnets. The plurality of subnets are arranged in a sequence from the lowest to the highest, and the input image data is processed through each of the plurality of sub-networks in the sequence. The plurality of subnets in the sequence include multiple modular subnets and one or more other subnets. The one or more other subnets include one or more conventional neural network layers, such as a maximum pooling layer, a convolution layer, a fully connected layer, and a regularization layer. Each subnet receives a previous output representation generated by a preceding subnet in the sequence. The previous output representation is processed through pass-through convolution to generate a pass-through output. The previous output representation is processed through one or more groups of the neural network layers to generate one or more groups, and the pass-through output and the group output are connected to generate the output representation of the modular subnet.

In some embodiments, the input layer is used to input image data. The convolution layer is used to perform operations on the image data. The excitation layer is used to perform linear mapping operation on the output result of the convolution layer. The pooling layer is used to compress the amount of data and parameters, reduce overfitting, and improve performance. In the embodiments of the present disclosure, semantically annotated sample image data is used as the input data and is inputted into the input layer of the CNN model. The image data is processed by the convolution layer. Confidence levels of different semantics are outputted through multiple channels, for example, a farmland channel (confidence level), a fruit tree channel (confidence level), and a river channel (confidence level). The output result of the CNN may be expressed as a tensor value. For example, for a certain pixel {latitude, longitude, height, K₁, K₂, ..., Kₙ}, the tensor value represents three-dimensional (3D) point cloud information of the pixel and the semantics information of n channels, where K₁, K₂, ..., Kₙ represent the confidence levels, and the semantic channel with the highest confidence level in the tensor data is considered as the semantic type of the pixel. For example, the confidence level of the i-th semantic channel is *Kᵢ* = 0.8, which is the highest confidence level. Then, the semantic type corresponding to the i-th channel is the semantic type of the pixel. In some embodiments, inclusion of depth data may add a dimension of information to RGB pixel information obtained by a movable platform. Using the RGB data set with the depth data optimizes a training process, and substantially improves an accuracy of a training model for recognizing the ground objects. The depth data may be obtained by a binocular camera, or may be obtained through processing a series of consecutive image frames captured by a monocular camera during an aerial photographing flight.

In some embodiments, the multiple semantic types with different semantic confidence levels are obtained from multiple output channels after being identified by the semantics recognition model. In some embodiments, different from output results of a generic neural network, a segmented output function is added at the multiple output channels of the neural network consistent with the present disclosure. If the confidence level of the output channel is negative, the confidence level of the output channel is set to zero to ensure the confidence level outputted by the neural network is a positive floating-point number. Making the confidence level of the semantic channel the positive floating-point number may allow directly obtaining a greater confidence level by subtracting point data of two pixels. Because tensor subtraction only involves subtracting numbers of corresponding arrays, the amount of calculation is insignificant. Under the same computing power, a calculation speed is substantially improved. This is suitable for addressing the problem of computing power shortage caused by the substantial amount of calculation required in a process of drawing a high-precision map.

In some embodiments, the position data corresponding to the target image data includes the longitude and latitude of the target image. The height data corresponding to the target image data includes the height of the target image. In some embodiments, the position data and the height data of the target image data may be obtained based on global positioning system (GPS) information or may be obtained through calculation based on carrier phase differential technique or real-time kinematic (RTK). In some embodiments, feature data corresponding to the target image data may be obtained through calculation based on the position data and the height data of the target image data. In this way, the confidence level feature map of the semantics of the target image data is generated to determine the feature type based on the semantic type in the confidence level feature map in the photographing application of the movable platform.

In one embodiment, after the image processing device processes the target image data to obtain the confidence level feature map of the semantics of the target image data, based on the semantic confidence level for each piece of point data in the confidence level feature map, the image processing device further processes the confidence level feature map to update the confidence level feature map based on a processing result.

In one embodiment, when the image processing device processes the confidence level feature map based on the confidence level of semantics for each piece of point data in the confidence level feature map, the image processing device may check the semantic confidence level for each piece of point data in the confidence level feature map, and may delete the corresponding piece of point data when the semantic confidence level in the confidence level feature map is smaller than or equal to a preset confidence level threshold. As such, when the image processing device updates the confidence level feature map based on the processing result, the image processing device may update the confidence level feature map based on the point cloud data after a deletion process.

For example, assuming that the preset confidence level threshold is 0.6, when the image processing device processes the confidence level feature map based on the semantic confidence level for each piece of point data in the confidence level feature map, the image processing device may check the semantic confidence level for each piece of point data in the confidence level feature map, and may delete the corresponding piece of point data when the semantic confidence level in the confidence level feature map is smaller than or equal to the preset confidence level threshold 0.6, such that when the image processing device updates the confidence level feature map based on the processing result, the image processing device may update the confidence level feature map based on the point cloud data after the deletion process.

In some embodiments, the point cloud data in the confidence level feature map may be shown in different shapes to represent different semantic types. For example, the point data in a circle shape represents a tree, the point data in a square shape represents a person, the point data in a triangle shape represents a rice field, such that different target objects of different semantic types can be distinguished. In some embodiments, the point cloud data in the confidence level feature map may be shown in different colors to represent different semantic types. For example, the point data in a green circle shape represents the tree, the point data in a yellow square shape represents the person, the point data in a red circle shape represents the rice field. The point cloud data in the confidence level feature map may also be shown in different other forms to represent different semantic types, which is not limited by the present disclosure.

In one embodiment, before the image processing device processes the target image data based on the semantics recognition model, the image processing device may obtain a sample database. The sample database includes sample image data. An initial semantics recognition model is generated based on a preset semantics recognition algorithm. The initial semantics recognition model is trained for optimization based on the sample image data in the sample database to obtain the semantics recognition model. In some embodiments, the sample image data includes a sample image and semantics annotation information thereof. In some other embodiments, the sample image data includes the sample image, depth data corresponding to various pixels in the sample image, and the semantics annotation information thereof.

In some embodiments, the sample image data includes the sample image and the depth data corresponding to various pixels in the sample image. The sample image may be an RGB image. The depth data may be obtained through a depth image. Based on the preset semantics recognition algorithm, the image processing device generates the initial semantics recognition model, and uses the sample image data including the semantics annotation information as input data to train the initial semantics recognition model to obtain a training result. The training result includes the semantics of each pixel in the sample image and the corresponding confidence level of the semantics thereof. After the training result is obtained, the image processing device may compare the semantics of each pixel in the sample image in the training result with the semantics annotation information of the sample image. If the semantics of each pixel in the sample image in the training result does not match the semantics annotation information of the sample image, the image processing device adjusts parameters in the initial semantics recognition model until the semantics of each pixel in the sample image in the training result matches the semantics annotation information of the sample image. Then the image processing device generates the semantics recognition model.

In some embodiments, the sample image may include a color image or an orthoimage. In some embodiments, the orthoimage is a top view image that has been geometrically corrected (e.g., having a uniform scale). Different from the uncorrected top view image, the orthoimage may be used to measure actual distance. Because the orthoimage that has been geometrically corrected truthfully reflects the Earth surface, the orthoimage is informative, intuitive, and measurable. In some embodiments, the depth data reflects a distance between the photographing device and the to-be-photographed object.

In one embodiment, when the image processing device performs the optimization training on the initial semantics recognition model based on the sample image data in the sample database to obtain the semantics recognition model, the image processing device may invoke the initial semantics recognition model to recognize the sample image included in the sample image data and the depth data corresponding to various pixels in the sample image to obtain a recognition result. If the recognition result matches the semantics annotation information included in the sample image data, the model parameters of the initial semantics recognition model may be optimized to obtain the semantics recognition model.

At S203, based on the confidence level feature map, a position of a target region in the target image data is determined.

In some embodiments, the image processing device may determine the position data of the target region in the target image data based on the confidence level feature map.

In one embodiment, when the image processing device determines the position of the target region in the target image data based on the confidence level feature image, the image processing device may obtain the position data and the semantic type for each piece of point data in the confidence level feature map, and may determine an image region having the identical semantic type in the confidence level feature map based on the position data and the semantic type for each piece of point data in the confidence level feature map. Thus, the image processing device determines the position data of the target region on the ground in the target image data based on the image region having the identical semantic type in the confidence level feature map.

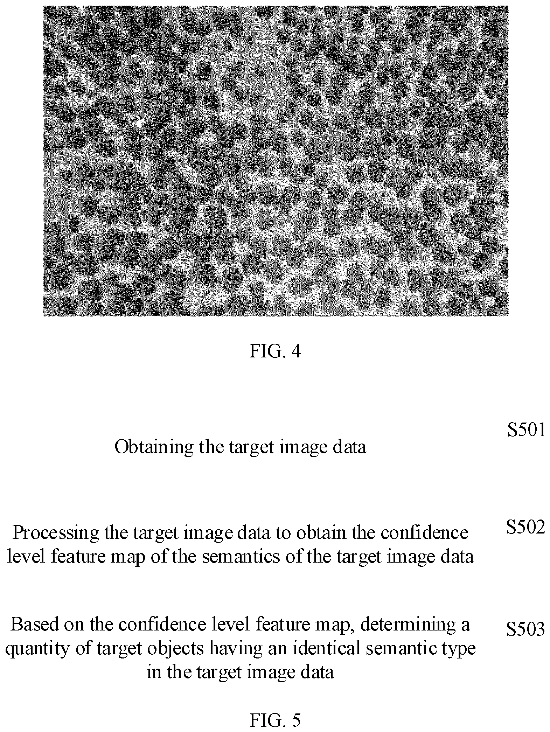

For example, based on the confidence level feature map shown in FIG. 3A, target objects on the ground in the target image data may be determined as shown in FIG. 4, and the position data of the target region corresponding to the target objects on the ground may be determined. FIG. 4 is a schematic diagram of identifying target objects according to embodiments of the present disclosure. The semantic type of the target objects identified in FIG. 4 is the tree. In some other embodiments, the semantic type of the target object may include a person, a telephone pole, and crops, etc., which is not limited by the present disclosure.

In one embodiment, when the image processing device determines the image region having the identical semantic type in the confidence level feature map based on the position data and the semantic type for each piece of point data in the confidence level feature map, the image processing device may determine the image region having the continuous identical semantic type in the confidence level feature map based on the semantic type in the confidence level feature map, and may perform a periphery processing on each image region having the continuous identical semantic type to obtain various image regions having different semantic types in a point cloud map.

In one embodiment, after the image processing device determines the position of the target region in the target image data based on the confidence level feature map, the image processing device may plan a flight route based on the position data of the target region and the semantic type in the target image data, and may control the movable platform to move according to the planned flight route. In this way, the image movable platform may be controlled to move according to the planned flight route and to perform tasks corresponding to the semantic type of the target region.

In some embodiments, when the image processing device plans the flight route based on the position of the target region and the semantic type in the target image data, the image processing device may classify the image regions with different semantic types based on the image regions with different semantic types in the confidence level feature map, and may plan the flight route corresponding to each of the image regions with different semantic types based on the image regions with different semantic types.

In some embodiments, when controlling the movable platform to move according to the planned flight route, the image processing device may determine whether the semantic type in the confidence level feature map corresponding to a current position of the movable platform matches the semantic type of a target task. If a determination result is positive, the movable platform is controlled to perform the target task. If the determination result is negative, the movable platform is controlled to stop performing the target task. In some embodiments, the movable platform includes, but is not limited to, the UAV or an unmanned automobile that automatically moves according to a planned route.

In some embodiments, when the movable platform is controlled to move according to the planned flight route, the movable platform may be controlled to make a stop at a marked point in the planned flight route to perform a pre-determined operation corresponding to the target task. In some embodiments, the pre-determined operation includes a pesticide spraying operation. The pesticide spraying operation includes a spraying operation circling around a designated point.

For example, assuming that the movable platform is the UAV. The semantic type of the target region is the tree. Based on the position of the target region and the semantic type in the target image data, the image processing device may plan the route in the region where the tree is located based on the position of the target region and the semantic type in the target image data. When the UAV needs to perform the pesticide spraying task, the image processing device may control the UAV to move according to the planned flight route, and may control the UAV to perform the pesticide spraying task when the UAV is moving according to the planned flight route.

In the embodiments of the present disclosure, the image processing device may obtain the target image data. The target image data includes the target image and the depth data corresponding to various pixels in the target image. The image processing device processes the target image data to obtain the confidence level feature map of the semantics of the target image data, and determines the position of the target region in the target image data based on the confidence level feature map. In this way, the position of the target region in the target image data can be rapidly and efficiently recognized, thereby improving positioning efficiency of the image region.

FIG. 5 is a schematic flowchart of another image processing method according to embodiments of the present disclosure. The method may be performed by the image processing device as previously described. Compared with the embodiments in FIG. 2, the embodiments in FIG. 5 include a detailed description of counting the target objects having the identical semantic type in the target image data. The target objects may be objects such as trees, buildings, people, and automobiles, etc., which can be recognized and counted in the target image data.

At S501, the target image data is obtained.

In some embodiments, the image processing device may obtain the target image data. In some embodiments, the target image data includes the target image and the depth data corresponding to various pixels in the target image.

In some embodiments, the target image data includes a color image. In some embodiments, the target image data includes the color image and the depth data corresponding to the color image. In some embodiments, the target image data includes the orthoimage. In some embodiments, the target image data includes the orthoimage and the depth data corresponding to the orthoimage. The implementation details may be referred to the foregoing embodiments, and are omitted herein.

At S502, the target image data is processed to obtain the confidence level feature map of the semantics of the target image data.

In some embodiments, the image processing device may process the target image data to obtain the confidence level feature map of the semantics of the target image data.

In one embodiment, the image processing device processes the target image data to obtain the semantic type and the semantic confidence level for each pixel in the target image data based on the semantics recognition model, and generates the point cloud data including the semantic type and the semantic confidence level based on the position data and the height data corresponding to the target image data, and the semantic type and the semantic confidence level for each pixel in the target image data. The point cloud data including the semantic type and the semantic confidence level is used to generate the confidence level feature map. The implementation details are described in the foregoing embodiments and are omitted herein.

In some embodiments, the point cloud data and the confidence level feature map both include multiple point data. Each piece of point data includes the position data, the height data, and multiple semantic types with different semantic confidence levels. Each piece of point data in the point cloud data corresponds to one pixel in the target image data.

In one embodiment, after the image processing device processes the target image data to obtain the semantics and the confidence level feature map of the target image data, the image processing device further processes the confidence level feature map based on the semantics and the confidence level for each piece of point data in the confidence level feature map, and updates the confidence level feature map based on the processing result. The implementation details are described in the foregoing embodiments and are omitted herein.

In one embodiment, when the image processing device processes the confidence level feature map based on the semantics and the confidence level for each piece of point data in the confidence level feature map, the image processing device may check the semantic confidence level for each piece of point data in the confidence level feature map, and may delete the corresponding piece of point data when the semantic confidence level in the confidence level feature map is smaller than or equal to the preset confidence level threshold. As such, when the image processing device updates the confidence level feature map based on the processing result, the image processing device may update the confidence level feature map based on the point cloud data after the deletion process. The implementation details are described in the foregoing embodiments and are omitted herein.

In one embodiment, before the image processing device processes the target image data based on the semantics recognition model, the image processing device may obtain the sample database. The sample database includes the sample image data. The initial semantics recognition model is generated based on the preset semantics recognition algorithm. The initial semantics recognition model is trained for optimization based on the sample image data in the sample database to obtain the semantics recognition model. In some embodiments, the sample image data includes the sample image and the semantics annotation information thereof. In some other embodiments, the sample image data includes the sample image, the depth data corresponding to various pixels in the sample image, and the semantics annotation information thereof. The implementation details are described in the foregoing embodiments and are omitted herein.

In one embodiment, the image processing device may invoke the initial semantics recognition model to recognize the sample image included in the sample image data and the depth data corresponding to various pixels in the sample image to obtain the recognition result. If the recognition result matches the semantics annotation information included in the sample image data, the model parameters of the initial semantics recognition model may be optimized to obtain the semantics recognition model. The implementation details are described in the foregoing embodiments and are omitted herein.

At S503, based on the confidence level feature map, a quantity of target objects having an identical semantic type in the target image data is determined.

In some embodiments, the image processing device may determine the quantity of the target objects having the identical semantic type in the target image data based on the confidence level feature map.

In one embodiment, when the image processing device determines the quantity of the target objects having the identical semantic type in the target image data based on the confidence level feature image, the image processing device may obtain the semantic type for each piece of point data in the confidence level feature map, classify the point data having different semantic types in the confidence level feature map, and calculate the quantity of the point data having different semantic types in the confidence level feature map. Thus, the image processing device determines the quantity of the point data having each of the different semantic types in the confidence level feature map to be the quantity of the target objects having the identical semantic type in the target image data.

Specifically, FIG. 3A can be taken as an example for illustration. For example, the image processing device determines the only semantic type in the confidence level feature map to be the tree based on the semantic type for each piece of point data in the confidence level feature map shown in FIG. 3A. If the image processing device calculates the quantity of the point data corresponding to the semantic type tree in the confidence level feature map to be 300, the image processing device determines the quantity of the trees in the target image data to be 300.

In one embodiment, the point data in the confidence level feature map may be shown in different shapes to represent different semantic types. When the image processing device determines the quantity of the target objects having the identical semantic type in the target image data based on the confidence level feature map, the image processing device may determine the semantic type based on the shape of the point data in the confidence level feature map. For example, the confidence level feature map includes the image region of the circle-shaped point data and the image region of the square-shaped point data, the circle-shaped point data represents the tree, and the square-shaped point data represents the person. The image processing device may determine the quantity of the trees by calculating the quantity of the circle-shaped point data in the confidence level feature map and may determine the quantity of the people by calculating the quantity of the square-shaped point data in the confidence level feature map.

In one embodiment, the point data in the confidence level feature map may be shown in different colors to represent different semantic types. When the image processing device determines the quantity of the target objects having the identical semantic type in the target image data based on the confidence level feature map, the image processing device may determine the semantic type based on the color of the point data in the confidence level feature map. For example, the confidence level feature map includes the image region of the red circle-shaped point data and the image region of the yellow circle-shaped point data, the red circle-shaped point data represents the tree, and the yellow circle-shaped point data represents the person. The image processing device may determine the quantity of the trees by calculating the quantity of the red circle-shaped point data in the confidence level feature map and may determine the quantity of the people by calculating the quantity of the yellow circle-shaped point data in the confidence level feature map.

In some embodiments, the image processing device may track a feature point in the target image data based on the target image data. In some embodiments, the image processing device may determine the point cloud data based on the feature point. Taking the UAV as an example. The method may include: obtaining first attitude information of a first image frame in a world coordinate system, where the first attitude information includes first RTK information and first gimbal angle information; based on the first attitude information, estimating second attitude information of a second image frame in the world coordinate system, where the second attitude information includes second RTK information and second gimbal angle information; based on the first attitude information and the second attitude information, performing a feature matching between feature information of the first image frame and feature information of the second image frame; and based on the feature matching result, tracking the feature point, where the first image frame and the second image frame are two adjacent image frames in a series of image frames.

In the existing vision-based solutions, a uniform motion model is often used to estimate the attitude of a camera for a succeeding frame. Because of swift maneuver of the UAV, the motion of the UAV often does not follow the uniform motion model. As a result, the attitude estimated based on the uniform motion model may be inaccurate, thereby reducing tracking capacity and tracking accuracy of the feature points.

In the embodiments of the present disclosure, to obtain accurate attitude estimation, the RTK information and the gimbal angle information of the first image frame provided by a sensor are used to estimate the attitude of the second image frame. Because the RTK information and the gimbal angle information provided by the sensor are accurate, the accuracy of the estimated attitude information of the second image frame is substantially improved. The accurate attitude information improves the accuracy and speed of the feature matching.

In one embodiment, performing the feature matching between the feature information of the first image frame and the feature information of the second image frame based on the first attitude information and the second attitude information includes: obtaining the feature of the first image frame and the second image frame; determining a search range corresponding to the feature of the first image frame in the second image frame based on the first attitude information and the second attitude information; and performing the feature matching accordingly. Because the obtained attitude information is accurate, the search range may be accurately determined, and the search range is substantially reduced. Thus, not only the accuracy of the feature matching is improved, but also the speed of the feature matching is improved.

Because the flying speed of the UAV is fast, an overlapping rate between two adjacent image frames is low, resulting in poor tracking of the feature point. In one embodiment, when tracking the feature, determining whether a preceding image frame is a key image frame is introduced. If the preceding image frame is the key image frame, the feature information of the key image frame replaces the original feature information of the preceding image frame. Because the key image frame includes additional 3D point cloud generation operation, the available 3D point cloud generated by the image of the overlapping region may be used to the maximum extent within a limited time, such that the number of the effective feature points for tracking is increased.

In one embodiment, after the feature tracking is completed, all feature point matching pairs are used for attitude calculation. In one embodiment, the RTK information and the gimbal angle information provided by the sensor is introduced in the attitude calculation, such that the attitude calculation is more accurate and is less susceptible to interference from mismatching. It solves the problem in the existing technology that in the vision-based solution, when the mismatching occurs, the accuracy of the attitude calculation is reduced or errors may occur.

In some embodiments, to further improve the accuracy of target scene 3D reconstruction, before merging the 3D point cloud of the key image frame, the target scene 3D reconstruction method provided by the embodiments of the present disclosure further includes: based on the RTK information and the gimbal angle information corresponding to the key image frame, applying a non-linear optimization method to optimize the attitude information of the key image frame and the position of the 3D point cloud.

The present disclosure does not limit the specific algorithm used in the non-linear optimization. For example, the Gauss Newton method and the crack Berg-Marquardt method may be used.

In one embodiment, before a globally consistent map is constructed based on the key image frame and its 3D point cloud, an optimization process is performed based on the RTK information and the gimbal angle information. Specifically, the optimization process may include the following process. First, a local map is maintained. The local map may include a current frame, a key frame of the current frame, and point cloud observed in both the current frame and the key frame of the current frame. When the local map is adjusted by applying the non-linear optimization process, the RTK information and the gimbal angle information corresponding to each key frame included in the optimization process are added, such that the attitude calculation of the key frame and the position of the 3D point cloud are more accurate.

In the embodiments of the present disclosure, more accurate sensor information, that is, the RTK information and the gimbal angle information, are introduced in the non-linear optimization process. An optimized cost function not only considers the re-projection error, but also considers a gap between the current estimated attitude and the attitude provided by the sensor. The optimized cost function is used to obtain optimal attitude estimation. Thus, the problem of poor stability caused by only considering the visual re-projection error in the existing technology is solved.

In some embodiments, after real-time measurement is completed, the remaining key frame and the point cloud are globally optimized. The introduction of the RTK information and the gimbal angle information in the global optimization makes a final output result more accurate.

Based on the previous embodiments, to obtain the more accurate key frame of the 3D point cloud key frames to improve the accuracy of the target scene 3D reconstruction, the present disclosure provides a target scene 3D reconstruction method. The method may include selecting a reference frame from the image sequence for the key frame, determining the depth map of the key frame based on the selected reference frame, and obtaining the 3D point cloud of the key frame based on the depth map of the key frame. The reference frame may include at least a first image frame and a second image frame. The first image frame is located before the keyframe in time series, and the second image frame is located after the key frame in time series.

When the UAV performs aerial photographing, the UAV may fly along a planned flight route. When the UAV flies along the planned flight route, a large portion of a current image frame does not exist in the previously captured image frame. In other words, if the reference frame only includes the image frames captured before the current image frame, when the determining the depth map of the current image frame based on the reference frame, parallax in a considerably large portion of the current image frame cannot be resolved, and the resulting depth map includes a large invalid region.

Therefore, to avoid absence of a region in the key frame matching a corresponding region in the reference frame, which invalidates the corresponding region in the depth map, the reference frame not only includes the first image frame located before the key frame in time series, but also includes the second image frame located after the key frame in time series. Thus, the overlapping rate between the key frame and the reference frame is increased, the region with unresolvable parallax is reduced, and the accuracy of the depth map of the key frame obtained based on the reference frame is improved.

In sone embodiments, if the key frame is the *N*th frame, the first image frame is the (*N-1*)th frame, and the second image frame is the (*N+1*)th frame, that is, the reference frame includes the two frames adjacent to the key frame. For example, when the UAV performs the aerial photographing, the overlapping rate between two adjacent frames is 70%. If the reference frame only includes the image frame located before the key frame, at least 30% of the key frame does not have resolvable parallax. The reference frame selection strategy provided by the present disclosure makes the entire key frame correspond to a match counterpart in the reference frame, thereby avoiding the problem of unresolvable parallax and improving the accuracy of the depth map of the key frame.

In some embodiments, if the key frame is the *N*th frame, the first image frame may include a preset number of frames located before the *N*th frame, and the second image frame may include the preset number of frames located after the *N*th frame.

In some embodiments, if the key frame is the *N*th frame, the first image frame may be one of the preset number of frames located before the *N*th frame, and the second image frame may be one of the preset number of frames located after the *N*th frame.

Based on the previous embodiments, to increase reliability of depth map of the key frame to improve the accuracy of the target scene 3D reconstruction, the present disclosure provides another target scene 3D reconstruction method, in which the reference frame may at least include a third image frame. Directions of epipolar lines of the third image frame and the key frame are not parallel with each other.

In some embodiments, the epipolar line is an epipolar line in the epipolar geometry, that is, an intersection line between the epipolar plane and the image. The directions of the epipolar lines of the third image frame and the key frame are not parallel with each other. In other words, a first intersection line between the epipolar plane and the third image frame is not parallel with a second interaction line between the epipolar plane and the key frame.

When repetitive textures exist in the key frame, if the directions of the epipolar lines of the key frame and the reference frame are parallel with each other, the repetitive textures may be distributed along the paralleled epipolar lines and the reliability of the depth map in the corresponding region may be reduced. Thus, the third image frame having the epipolar line unparalleled with the epipolar line of the key frame is selected as the reference frame to avoid the problem of the repetitive textures distributed along the paralleled epipolar lines, thereby improving the reliability of the depth map.

In some embodiments, the third image frame may include an image frame in an aerial scan adjacent to the key frame, which includes pixels overlapping with the key frame.

In some embodiments, the third image frame may include an image frame in the aerial scan adjacent to the key frame, which includes most pixels overlapping with the key frame.

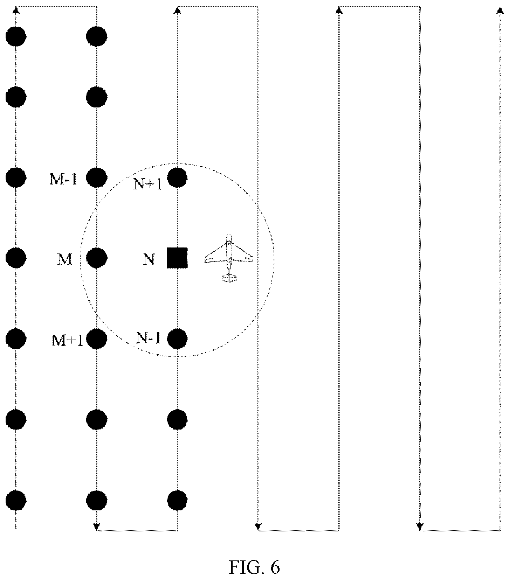

The method for selecting the reference frame is illustrated below in the embodiments of the present disclosure. FIG. 6 is a schematic diagram of reference frame selection in a method for three-dimensional (3D) reconstruction of a target scene according to embodiments of the present disclosure. As shown in FIG. 6, a solid line represents the flight route of the UAV. The flight route covers the target scene. Arrows represent a flying direction of the UAV. Black circles and black squares on the flight route represent locations at which the photographing device of UAV performs photographing. That is, each of the black circles and the black squares corresponds to one image frame of the target scene. When the UAV flies along the flight route, the photographing device mounted on the UAV, such as a monocular camera, captures an image sequence of the target scene, including a plurality of image frames consecutive in time sequence. As shown in FIG. 6, M-1, M, M+1, N-1, N, N+1 are sequence numbers of image frames. M and N are natural numbers. Values of M and N are not limited by the present disclosure.

In one embodiment, if the *N*th frame represented by the black square is a key frame, the reference frame may include the (*N-1*)th frame and the (*N*+*1*)th frame in FIG. 6.

In one embodiment, if the *N*th frame represented by the black square is a key frame, the reference frame may include the Mth frame in FIG. 6.

In one embodiment, if the *N*th frame represented by the black square is a key frame, the reference frame may include the Mth frame, the (*N*-*1*)th frame, and the (*N*+*1*)th frame in FIG. 6, that is, the image frames included in the dotted circle.

In some embodiments, the reference frame may include more image frames, such as (*M-1*)th frame, the (*M*+*1*)th frame, and the (*N*-*2*)th frame. In actual implementation, the overlapping rate between the key frame and the reference frame and the calculation speed may be jointly considered in selecting the reference frame.

In some embodiments, obtaining the depth map of the key frame based on the reference frame includes: obtaining the depth map of the key frame based on a disparity between the key frame and the reference frame.

In one embodiment, the depth map of the key frame may be obtained based on the disparity of a same object between the key frame and the reference frame.

In some embodiments, obtaining the 3D point cloud of the key frame based on the image sequence includes: obtaining the depth map of the key frame based on the image sequence and obtaining the 3D point cloud of the key frame based on the depth map of the key frame.

In some embodiments, obtaining the depth map of the key frame based on the image sequence includes: determining a matching cost corresponding to the key frame based on the image sequence and determining the depth map of the key frame based on the matching cost corresponding to the key frame.

In some embodiments, the image sequence and the pixels in the key frame are matched to determine the matching cost corresponding to the key frame. After the matching cost corresponding to the key frame is determined, the matching cost may be aggregated to determine a parallax. Based on a mapping relationship between the parallax and the depth, the depth map of the key frame is determined. In some embodiments, after the parallax is determined, the parallax may be optimized for enhancement. The optimized and enhanced parallax is used to determine the depth map of the key frame.

The UAV often flies around 100 meters above the ground. The UAV often captures images vertically downward. Because of the undulations of the ground, reflection of sunlight varies. The images captured by the UAV may have substantial changes in lighting. The changes in lighting reduces the accuracy of 3D reconstruction of the target scene.

In some embodiments, the robustness of the 3D reconstruction of the target scene against the changing lighting may be improved for the method of the 3D reconstruction of the target scene. Determining the matching cost corresponding to the key frame based on the image sequence includes: determining a first type matching cost and a second type matching cost corresponding to the key frame and determining the matching cost corresponding to the key frame to be equal to a weighted sum of the first type matching cost and the second type matching cost.

In some embodiments, when calculating the matching cost, the first type matching cost and the second type matching cost are mixed. Compared with using a single type matching cost, mixing the first type matching cost and the second type matching cost increases the robustness of the matching cost against the changing lighting, reduces the effect of the changing lighting on the 3D reconstruction, and improves the accuracy of the 3D reconstruction. The weights for the first type matching cost and the second type matching cost may be set according to actual requirements and are limited by the present disclosure.

In some embodiments, the first type matching cost is determined based on a zero-based normalized cross correlation (ZNCC) process. The ZNCC process accurately measures a similarity between the key frame and the reference frame.

In some embodiments, the second type matching cost is determined based on a constant lighting feature. The constant lighting feature, such as local binary patterns (LBP) and a census sequence, may be extracted from the image frames captured by the UAV. Based on the constant lighting feature, the second type matching cost may be determined.

In some embodiments, the census sequence may be determined as follows. A point is selected from the image frame. A 3x3 rectangular shape is drawn with the selected point as the center. Except the point in the center, each and every point in the rectangular shape is compared with the point in the center. A comparison result is 1 when a greyscale value of a point is smaller than a greyscale value of the point in the center, and the comparison result is 0 when the greyscale value of the point is greater than the greyscale value of the point in the center. The comparison results form a sequence of 0s and 1s with a length of 8. The sequence is the census sequence of the center point. The greyscale of the pixel at the center point is replaced by the census sequence.

After a census transform, a Hamming distance may be used to determine the second type matching cost of the key frame.

For example, the matching cost corresponding to the key frame may be equal to the weighted sum of a ZNCC matching cost and a census matching cost.

In some embodiments, determining the depth map of the key frame based on the matching cost corresponding to the key frame includes: dividing the key frame into a plurality of image blocks, determining the matching cost corresponding to each image block based on an image sequence, and determining the matching cost corresponding to the key frame based on the matching cost corresponding to each of the plurality of image blocks.

In some embodiments, one or more of the following methods may be used to divide the key frame into the plurality of image blocks.

(1) A clustering method is used to divide the key frame into the plurality of image blocks. For example, based on color information and/or texture information of the key frame, the clustering method is used to divided the key frame into the plurality of image blocks.

(2) The key frame is evenly divided into the plurality of image blocks. For example, a number of the image blocks is pre-configured, and the key frame is divided base on the pre-configured number of the image blocks.

(3) The key frame is divided into the plurality of image blocks, each having a pre-configured size. For example, a size of each image block is pre-configured, and the key frame is divided based on the pre-configured size of each image block.

In some embodiments, after the key frame is divided into the plurality of image blocks, the matching cost corresponding to each image block may be determined in parallel based on the image sequence. For example, the matching cost corresponding to each image block may be determined by a software and/or hardware method. Specifically, the matching cost corresponding to each image block may be determined in parallel by multiple threads. The matching cost corresponding to each image block may be determined in parallel by a graphics processing unit (GPU). The matching cost corresponding to each image block may be determined in parallel by the multiple threads and the graphics processing unit (GPU).

In the method of the 3D reconstruction of the target scene provided by the embodiments of the present disclosure, the key frame is divided into the plurality of image blocks. The matching cost corresponding to each image block is determined in parallel based on the image sequence. The matching cost corresponding to the key frame is determined based on the matching cost corresponding to each image block. Thus, a speed of calculating the matching cost is increased, and real-time performance of the 3D reconstruction of the target scene is improved.

A number of depth samples may be determined based on a depth range and accuracy. The number of the depth samples is positively correlated to the depth range, and is negatively correlated to the accuracy. For example, if the depth range is 50 meters and the accuracy requirement is 0.1 meter, the number of the depth samples is 500.

For example, a pre-configured number of the depth samples may be used to determine the matching cost of the key frame. In another example, simultaneous localization and mapping (SLAM) may be used to recover some sparse 3D points in the key frame. Based on the sparse 3D points, the depth range of the entire key frame is determined. Based on the depth range of the entire key frame and the accuracy requirement, the number of the depth samples is determined. If the number of the depth samples is N, the matching cost needs to be calculated N times for each pixel in the key frame. For the key frame with a size of 640^{∗}480 pixels, 640^{∗}480^{∗}N matching costs need to be calculated.

In some embodiments, to increase a processing speed and improve the real-time performance of the 3D reconstruction of the target scene, determining the matching cost corresponding to each image block based on the image sequence includes: determining the number of the depth samples of each image block based on the sparse points in each image block; and determining the matching cost corresponding to each image block based on the image sequence and the number of the depth samples of each image block.

In some embodiments, when the UAV captures images vertically downwards, the key frame may include multiple to-be-photographed objects, such as pedestrians, cars, trees, and tall buildings, etc. As such, the depth range of the entire key frame is relatively large, and the number of the depth samples under the pre-configured accuracy requirement is relatively large. However, the depth range corresponding to each image block in the kay frame is relatively small. For example, one image block only contains a pedestrian. The depth range corresponding to the image block is substantially smaller than the depth range of the entire key frame. Under a same accuracy requirement, the number of the depth samples may be substantially reduced. In other words, under the same accuracy requirement, the number of the depth samples of each image block in the key frame is smaller than or equal to the number of the depth samples of the entire key frame.

In the embodiments of the present disclosure, the image processing device may obtain the target image data. The target image data includes the target image and the depth data corresponding to various pixels in the target image. The target image data is processed to obtain the confidence level feature map of the semantics of the target image data. Based on the confidence level feature map, the quantity of the target objects having the identical semantic type in the target image data is determined. Through the embodiments, the target objects having the identical semantics in the target image data are automatically counted based on the confidence level feature map, thereby improving counting efficiency.

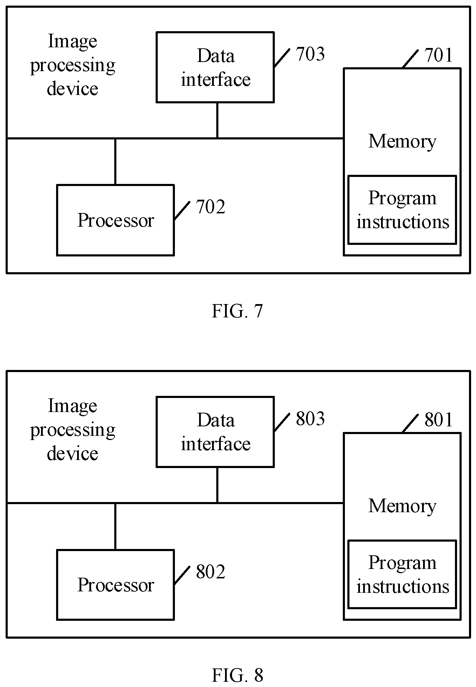

FIG. 7 is a schematic structural diagram of an image processing device according to embodiments of the present disclosure. As shown in FIG. 7, the image processing device includes a memory 701, a processor 702, and a data interface 703.

The memory 701 may include a volatile memory. The memory 701 may also include a non-volatile memory. The memory 701 may also include a combination of the foregoing types of memories. The processor 702 may be a central processing unit (CPU). The processor 702 may also include a hardware chip. The hardware chip may be an application-specific integrated circuit (ASIC), a programmable logic device (PLD), or a combination thereof. For example, the PLD may be a complex programmable logic device (CPLD), a field-programmable gate array (FPGA), or a combination thereof.

In some embodiments, the memory 701 stores program instructions. When the program instructions are executed, the processor 702 calls the program instructions stored in the memory 701 to perform: obtaining the target image data, the target image data including the target image and the depth data corresponding to various pixels in the target image; processing the target image data to obtain the confidence level feature map of the semantics of the target image data; and based on the confidence level feature map, determining the position of the target region in the target image data.

In some embodiments, when processing the target image data to obtain the confidence level feature map of the semantics of the target image data, the processor 702 is further configured to: process the target image data based on the semantics recognition model to obtain the semantic type and the semantic confidence level of each pixel in the target image data; generate the point cloud data including the semantic type and the semantic confidence level based on the position data and the height data corresponding to the target image data, and the semantic type and the semantic confidence level of each pixel in the target image data; and generate the confidence level feature map based on the point cloud data including the semantic type and the semantic confidence level.

In some embodiments, the point cloud data and the confidence level feature map include the plurality of pieces of point data. Each piece of point data includes the position data, the height data, and the multiple semantic types with the different semantic confidence levels. Each piece of point data included in the point cloud data corresponds to each pixel in the target image data.

In some embodiments, after processing the target image data to obtain the confidence level feature map of the semantics of the target image data, the processor 702 is further configured to: process the confidence level feature map based on the semantic confidence level of each piece of point data in the confidence level feature map; and update the confidence level feature map based on the processing result.

In some embodiments, when processing the confidence level feature map based on the semantic confidence level for each piece of point data in the confidence level feature map, the processor 702 is configured to: check the semantic confidence level for each piece of point data in the confidence level feature map; and delete the corresponding piece of point data when the semantic confidence level in the confidence level feature map is smaller than or equal to the preset confidence level threshold. As such, when updating the confidence level feature map based on the processing result, the processor 702 is further configured to update the confidence level feature map based on the point cloud data after the deletion process.

In some embodiments, when determining the position of the target region in the target image data based on the confidence level feature image, the processor 702 is configured to: obtain the position data and the semantic type for each piece of point data in the confidence level feature map; determine the image region having the identical semantic type in the confidence level feature map based on the position data and the semantic type for each piece of point data in the confidence level feature map; and determine the position data of the target region in the target image data based on the image region having the identical semantic type in the confidence level feature map.

In some embodiments, after determining the position of the target region in the target image data based on the confidence level feature map, the processor 702 is configured to: plan the flight route based on the position data of the target region and the semantic type in the target image data; and control the movable platform to move according to the planned flight route.

In some embodiments, when planning the flight route based on the position of the target region and the semantic type in the target image data, the processor 702 is configured to: classify the image regions with different semantic types based on the image regions with different semantic types in the confidence level feature map; and plan the flight route corresponding to each of the image regions with different semantic types based on the image regions with different semantic types.

In some embodiments, when controlling the movable platform to move according to the planned flight route, the processor 702 is configured to: determine whether the semantic type in the confidence level feature map corresponding to the current position of the movable platform matches the semantic type of the target task; and in response to the determination result being positive, control the movable platform to perform the target task.

In some embodiments, the movable platform includes, but is not limited to, the UAV or the unmanned automobile that automatically moves according to the planned route.

In some embodiments, when controlling the movable platform to move according to the planned flight route, the processor 702 is further configured to: control the movable platform to make the stop at the marked point in the planned flight route to perform the pre-determined operation corresponding to the target task.

In some embodiments, the pre-determined operation includes the pesticide spraying operation.

In some embodiments, the pesticide spraying operation includes the spraying operation circling around the designated point.

In some embodiments, the target image data includes the color image or the color image and the depth data corresponding to the color image; or the target image data includes the orthoimage or the orthoimage and the depth data corresponding to the orthoimage.

In some embodiments, before processing the target image data based on the semantics recognition model, the processor 702 is further configured to: obtain the sample database, the sample database including the sample image data; generate the initial semantics recognition model based on the preset semantics recognition algorithm; and train the initial semantics recognition model for optimization based on the sample image data in the sample database to obtain the semantics recognition model, where the sample image data includes the sample image and the semantics annotation information thereof or the sample image data includes the sample image, the depth data corresponding to various pixels in the sample image, and the semantics annotation information thereof.

In some embodiments, when performing the optimization training on the initial semantics recognition model based on the sample image data in the sample database to obtain the semantics recognition model, the processor 702 is further configured to: invoke the initial semantics recognition model to recognize the sample image included in the sample image data and the depth data corresponding to various pixels in the sample image to obtain the recognition result; and in response to the recognition result matching the semantics annotation information included in the sample image data, optimize the model parameters of the initial semantics recognition model to obtain the semantics recognition model.

In the embodiments of the present disclosure, the image processing device may obtain the target image data. The target image data includes the target image and the depth data corresponding to various pixels in the target image. The target image data is processed to obtain the confidence level feature map of the semantics of the target image data. Based on the confidence level feature map, the position of the target region in the target image data is determined. Through the embodiments, the position of the target region in the target image data is rapidly and efficiently recognized, thereby improving image region positioning efficiency.

FIG. 8 is a schematic structural diagram of another image processing device according to embodiments of the present disclosure. As shown in FIG. 8, the image processing device includes a memory 801, a processor 802, and a data interface 803.

The memory 801 may include a volatile memory. The memory 801 may also include a non-volatile memory. The memory 801 may also include a combination of the foregoing types of memories. The processor 802 may be a central processing unit (CPU). The processor 802 may also include a hardware chip. The hardware chip may be an application-specific integrated circuit (ASIC), a programmable logic device (PLD), or a combination thereof. For example, the PLD may be a complex programmable logic device (CPLD), a field-programmable gate array (FPGA), or a combination thereof.

In some embodiments, the memory 801 stores program instructions. When the program instructions are executed, the processor 802 calls the program instructions stored in the memory 801 to perform: obtaining the target image data, the target image data including the target image and the depth data corresponding to various pixels in the target image; processing the target image data to obtain the confidence level feature map of the semantics of the target image data; and based on the confidence level feature map, determining the quantity of the target objects having the identical semantic type in the target image data.

In some embodiments, when determining the quantity of the target objects having the identical semantic type in the target image data based on the confidence level feature map, the processor 802 is further configured to: classify the point data having different semantic types in the confidence level feature map based on the semantic type for each piece of point data in the confidence level feature map; calculate the quantity of the point data having different semantic types in the confidence level feature map; and determine the quantity of the point data having each of the different semantic types in the confidence level feature map to be the quantity of the target objects having the identical semantic type in the target image data.

In some embodiments, when processing the target image data to obtain the confidence level feature map of the semantics of the target image data, the processor 802 is further configured to: process the target image data based on the semantics recognition model to obtain the semantic type and the semantic confidence level of each pixel in the target image data; generate the point cloud data including the semantic type and the semantic confidence level based on the position data and the height data corresponding to the target image data, and the semantic type and the semantic confidence level of each pixel in the target image data; and generate the confidence level feature map based on the point cloud data including the semantic type and the semantic confidence level.

In some embodiments, the point cloud data and the confidence level feature map include the plurality of pieces of point data. Each piece of point data includes the position data, the height data, and the multiple semantic types with the different semantic confidence levels. Each piece of point data included in the point cloud data corresponds to each pixel in the target image data.

In some embodiments, after processing the target image data to obtain the confidence level feature map of the semantics of the target image data, the processor 802 is further configured to: process the confidence level feature map based on the semantic confidence level of each piece of point data in the confidence level feature map; and update the confidence level feature map based on the processing result.

In some embodiments, when processing the confidence level feature map based on the semantic confidence level for each piece of point data in the confidence level feature map, the processor 802 is configured to: check the semantic confidence level for each piece of point data in the confidence level feature map; and delete the corresponding piece of point data when the semantic confidence level in the confidence level feature map is smaller than or equal to the preset confidence level threshold. As such, when updating the confidence level feature map based on the processing result, the processor 802 is further configured to update the confidence level feature map based on the point cloud data after the deletion process.

In some embodiments, the target image data includes the color image or the color image and the depth data corresponding to the color image; or the target image data includes the orthoimage or the orthoimage and the depth data corresponding to the orthoimage.

In some embodiments, before processing the target image data based on the semantics recognition model, the processor 802 is further configured to: obtain the sample database, the sample database including the sample image data; generate the initial semantics recognition model based on the preset semantics recognition algorithm; and train the initial semantics recognition model for optimization based on the sample image data in the sample database to obtain the semantics recognition model, where the sample image data includes the sample image and the semantics annotation information thereof or the sample image data includes the sample image, the depth data corresponding to various pixels in the sample image, and the semantics annotation information thereof.

In some embodiments, when performing the optimization training on the initial semantics recognition model based on the sample image data in the sample database to obtain the semantics recognition model, the processor 802 is further configured to: invoke the initial semantics recognition model to recognize the sample image included in the sample image data and the depth data corresponding to various pixels in the sample image to obtain the recognition result; and in response to the recognition result matching the semantics annotation information included in the sample image data, optimize the model parameters of the initial semantics recognition model to obtain the semantics recognition model.

In the embodiments of the present disclosure, the image processing device may obtain the target image data. The target image data includes the target image and the depth data corresponding to various pixels in the target image. The target image data is processed to obtain the confidence level feature map of the semantics of the target image data. Based on the confidence level feature map, the quantity of the target objects having the identical semantic type in the target image data is determined. Through the embodiments, the quantity of the target objects having the identical semantic type in the target image data is automatically counted, thereby improving the counting efficiency.

The present disclosure also provides a movable platform. Specifically, the movable platform includes a propulsion system configured to supply a propulsion force to the movable platform, a memory, and a processor. The processor is configured to perform: obtaining the target image data, the target image data including the target image and the depth data corresponding to various pixels in the target image; processing the target image data to obtain the confidence level feature map of the semantics of the target image data; and based on the confidence level feature map, determining the position of the target region in the target image data.

In some embodiments, when processing the target image data to obtain the confidence level feature map of the semantics of the target image data, the processor is further configured to: process the target image data based on the semantics recognition model to obtain the semantic type and the semantic confidence level of each pixel in the target image data; generate the point cloud data including the semantic type and the semantic confidence level based on the position data and the height data corresponding to the target image data, and the semantic type and the semantic confidence level of each pixel in the target image data; and generate the confidence level feature map based on the point cloud data including the semantic type and the semantic confidence level.

In some embodiments, the point cloud data and the confidence level feature map include the plurality of pieces of point data. Each piece of point data includes the position data, the height data, and the multiple semantic types with the different semantic confidence levels. Each piece of point data included in the point cloud data corresponds to each pixel in the target image data.

In some embodiments, after processing the target image data to obtain the confidence level feature map of the semantics of the target image data, the processor is further configured to: process the confidence level feature map based on the semantic confidence level of each piece of point data in the confidence level feature map; and update the confidence level feature map based on the processing result.

In some embodiments, when processing the confidence level feature map based on the semantic confidence level for each piece of point data in the confidence level feature map, the processor is configured to: check the semantic confidence level for each piece of point data in the confidence level feature map; and delete the corresponding piece of point data when the semantic confidence level in the confidence level feature map is smaller than or equal to the preset confidence level threshold. As such, when updating the confidence level feature map based on the processing result, the processor is further configured to update the confidence level feature map based on the point cloud data after the deletion process.

In some embodiments, when determining the position of the target region in the target image data based on the confidence level feature image, the processor is configured to: obtain the position data and the semantic type for each piece of point data in the confidence level feature map; determine the image region having the identical semantic type in the confidence level feature map based on the position data and the semantic type for each piece of point data in the confidence level feature map; and determine the position data of the target region in the target image data based on the image region having the identical semantic type in the confidence level feature map.

In some embodiments, after determining the position of the target region in the target image data based on the confidence level feature map, the processor is configured to: plan the flight route based on the position data of the target region and the semantic type in the target image data; and control the movable platform to move according to the planned flight route.

In some embodiments, when planning the flight route based on the position of the target region and the semantic type in the target image data, the processor is configured to: classify the image regions with different semantic types based on the image regions with different semantic types in the confidence level feature map; and plan the flight route corresponding to each of the image regions with different semantic types based on the image regions with different semantic types.

In some embodiments, when controlling the movable platform to move according to the planned flight route, the processor is configured to: when controlling the movable platform to move according to the planned flight route, determine whether the semantic type in the confidence level feature map corresponding to the current position of the movable platform matches the semantic type of the target task; and in response to the determination result being positive, control the movable platform to perform the target task.

In some embodiments, the movable platform includes, but is not limited to, the UAV or the unmanned automobile that automatically moves according to the planned route.

In some embodiments, when controlling the movable platform to move according to the planned flight route, the processor is further configured to: control the movable platform to make the stop at the marked point in the planned flight route to perform the pre-determined operation corresponding to the target task.

In some embodiments, the pre-determined operation includes the pesticide spraying operation.

In some embodiments, the pesticide spraying operation includes the spraying operation circling around the designated point.

In some embodiments, the target image data includes the color image or the color image and the depth data corresponding to the color image; or the target image data includes the orthoimage or the orthoimage and the depth data corresponding to the orthoimage.

In some embodiments, before processing the target image data based on the semantics recognition model, the processor is further configured to: obtain the sample database, the sample database including the sample image data; generate the initial semantics recognition model based on the preset semantics recognition algorithm; and train the initial semantics recognition model for optimization based on the sample image data in the sample database to obtain the semantics recognition model, where the sample image data includes the sample image and the semantics annotation information thereof or the sample image data includes the sample image, the depth data corresponding to various pixels in the sample image, and the semantics annotation information thereof.

In some embodiments, when performing the optimization training on the initial semantics recognition model based on the sample image data in the sample database to obtain the semantics recognition model, the processor is further configured to: invoke the initial semantics recognition model to recognize the sample image included in the sample image data and the depth data corresponding to various pixels in the sample image to obtain the recognition result; and in response to the recognition result matching the semantics annotation information included in the sample image data, optimize the model parameters of the initial semantics recognition model to obtain the semantics recognition model.

In the embodiments of the present disclosure, the image processing device may obtain the target image data. The target image data includes the target image and the depth data corresponding to various pixels in the target image. The target image data is processed to obtain the confidence level feature map of the semantics of the target image data. Based on the confidence level feature map, the position of the target region in the target image data is determined. Through the embodiments, the position of the target region in the target image data is rapidly and efficiently recognized, thereby improving the image region positioning efficiency.

The present disclosure also provides another movable platform. Specifically, the movable platform includes a propulsion system configured to supply a propulsion force to the movable platform, a memory, and a processor. The processor is configured to perform: obtaining the target image data, the target image data including the target image and the depth data corresponding to various pixels in the target image; processing the target image data to obtain the confidence level feature map of the semantics of the target image data; and based on the confidence level feature map, determining the quantity of the target objects having the identical semantic type in the target image data.

In some embodiments, when determining the quantity of the target objects having the identical semantic type in the target image data based on the confidence level feature map, the processor is further configured to: classify the point data having different semantic types in the confidence level feature map based on the semantic type for each piece of point data in the confidence level feature map; calculate the quantity of the point data having different semantic types in the confidence level feature map; and determine the quantity of the point data having each of the different semantic types in the confidence level feature map to be the quantity of the target objects having the identical semantic type in the target image data.

In some embodiments, when processing the target image data to obtain the confidence level feature map of the semantics of the target image data, the processor is further configured to: process the target image data based on the semantics recognition model to obtain the semantic type and the semantic confidence level of each pixel in the target image data; generate the point cloud data including the semantic type and the semantic confidence level based on the position data and the height data corresponding to the target image data, and the semantic type and the semantic confidence level of each pixel in the target image data; and generate the confidence level feature map based on the point cloud data including the semantic type and the semantic confidence level.

In some embodiments, the point cloud data and the confidence level feature map include the plurality of pieces of point data. Each piece of point data includes the position data, the height data, and the multiple semantic types with the different semantic confidence levels. Each piece of point data included in the point cloud data corresponds to each pixel in the target image data.

In some embodiments, after processing the target image data to obtain the confidence level feature map of the semantics of the target image data, the processor is further configured to: process the confidence level feature map based on the semantic confidence level of each piece of point data in the confidence level feature map; and update the confidence level feature map based on the processing result.

In some embodiments, when processing the confidence level feature map based on the semantic confidence level for each piece of point data in the confidence level feature map, the processor is configured to: check the semantic confidence level for each piece of point data in the confidence level feature map; and delete the corresponding piece of point data when the semantic confidence level in the confidence level feature map is smaller than or equal to the preset confidence level threshold. As such, when updating the confidence level feature map based on the processing result, the processor is further configured to update the confidence level feature map based on the point cloud data after the deletion process.

In some embodiments, the target image data includes the color image or the color image and the depth data corresponding to the color image; or the target image data includes the orthoimage or the orthoimage and the depth data corresponding to the orthoimage.

In some embodiments, before processing the target image data based on the semantics recognition model, the processor is further configured to: obtain the sample database, the sample database including the sample image data; generate the initial semantics recognition model based on the preset semantics recognition algorithm; and train the initial semantics recognition model for optimization based on the sample image data in the sample database to obtain the semantics recognition model, where the sample image data includes the sample image and the semantics annotation information thereof or the sample image data includes the sample image, the depth data corresponding to various pixels in the sample image, and the semantics annotation information thereof.

In some embodiments, when performing the optimization training on the initial semantics recognition model based on the sample image data in the sample database to obtain the semantics recognition model, the processor is further configured to: invoke the initial semantics recognition model to recognize the sample image included in the sample image data and the depth data corresponding to various pixels in the sample image to obtain the recognition result; and in response to the recognition result matching the semantics annotation information included in the sample image data, optimize the model parameters of the initial semantics recognition model to obtain the semantics recognition model.

In the embodiments of the present disclosure, the image processing device may obtain the target image data. The target image data includes the target image and the depth data corresponding to various pixels in the target image. The target image data is processed to obtain the confidence level feature map of the semantics of the target image data. Based on the confidence level feature map, the quantity of the target objects having the identical semantic type in the target image data is determined. Through the embodiments, the quantity of the target objects having the identical semantic type in the target image data is automatically counted, thereby improving the counting efficiency.

The present disclosure also provides a UAV. The UAV includes a body, a propulsion system disposed at the body, and a photographing device for capturing target image data. The propulsion system includes propellers and electric motors for driving the propellers. The photographing device may be the image processing device shown in FIG. 7 and FIG. 8.

The present disclosure also provides a computer-readable storage medium. The computer-readable storage medium stores a computer program. When being executed by a processor, the computer program implements the embodiments of the image processing device shown in FIG. 7 and FIG. 8. The description thereof is omitted.

The computer-readable storage medium may be an internal storage unit of the device described in any of the foregoing embodiments. For example, the computer-readable storage medium may be a hard disk or an internal memory of the device. The computer-readable storage medium may also be an external storage device of the device, such as a plug-in hard disk, a smart media card (SMC), a secure digital (SD) card, a flash card, etc. Further, the computer-readable storage medium may also include an internal storage unit and the external storage device. The computer-readable storage medium may also store the computer program, and other programs and data required by the device. The computer-readable storage medium may also temporarily store already outputted data or to-be-outputted data.

Those skilled in the art should understand that all or part of the processes in the foregoing method embodiments can be implemented by instructing relevant hardware through a computer program. The computer program may be stored in the computer-readable storage medium, and when being executed, the computer program implements the processes of the foregoing method embodiments. The storage medium may be a magnetic disk, an optical disk, a read-only memory (ROM), or a random-access memory (RAM).

The foregoing embodiments describe in detail the objective, the technical solution, and the beneficial effect of the present disclosure. The foregoing embodiments are only some of the embodiments of the present disclosure, which should not be used to limit the scope of present disclosure. Therefore, changes, equivalent replacements, and modifications made according to the claims of the present disclosure still fall within the scope of the present disclosure.

## Claims

1. An image processing method, comprising:
obtaining target image data, the target image data including a target image and depth data corresponding to various pixels in the target image;
processing the target image data to obtain a confidence level feature map of semantics of the target image data; and
based on the confidence level feature map, determining a position of a target region in the target image data.

2. The method according to claim 1, wherein processing the target image data to obtain the confidence level feature map of the semantics of the target image data includes:
processing the target image data based on a semantics recognition model to obtain a semantic type and a semantic confidence level of each pixel in the target image data;
generating point cloud data including the semantic type and the semantic confidence level based on position data and height data corresponding to the target image data, and the semantic type and the semantic confidence level of each pixel in the target image data; and
generating the confidence level feature map based on the point cloud data including the semantic type and the semantic confidence level.

3. The method according to claim 2, wherein:
the point cloud data and the confidence level feature map include a plurality of pieces of point data, each piece of point data including the position data, the height data, and multiple semantic types with different semantic confidence levels.

4. The method according to claim 3, further comprising after processing the target image data to obtain the confidence level feature map of the semantics of the target image data:
processing the confidence level feature map based on the semantic confidence level for each piece of point data in the confidence level feature map; and
updating the confidence level feature map based on a processing result

5. The method according to claim 4, wherein:
processing the confidence level feature map based on the semantic confidence level for each piece of point data in the confidence level feature map includes:
checking the semantic confidence level for each piece of point data in the confidence level feature map; and
deleting the corresponding piece of point data when the semantic confidence level in the confidence level feature map is smaller than or equal to a preset confidence level threshold; and
updating the confidence level feature map based on the processing result includes updating the confidence level feature map based on the point cloud data after the deletion process.

6. The method according to claim 5, wherein determining the position of the target region in the target image data based on the confidence level feature image includes:
obtaining the position data and the semantic type for each piece of point data in the confidence level feature map;
determining an image region having an identical semantic type in the confidence level feature map based on the position data and the semantic type for each piece of point data in the confidence level feature map; and
determining the position data of the target region in the target image data based on the image region having the identical semantic type in the confidence level feature map

7. The method according to claim 6, further comprising, after determining the position of the target region in the target image data based on the confidence level feature map:
planning a flight route based on the position data of the target region and the semantic type in the target image data; and
controlling a movable platform to move according to a planned flight route.

8. The method according to claim 6, wherein planning the flight route based on the position data of the target region and the semantic type in the target image data includes:
classifying image regions with different semantic types based on the image regions with different semantic types in the confidence level feature map; and
planning the flight route corresponding to each of the image regions with different semantic types based on the image regions with different semantic types.

9. The method according to claim 7, wherein controlling the movable platform to move according to the planned flight route includes:
during a process of controlling the movable platform to move according to the planned flight route, determining whether the semantic type in the confidence level feature map corresponding to a current position of the movable platform matches the semantic type of a target task; and
in response to the determination result being positive, controlling the movable platform to perform the target task.

10. The method according to any of claims 7-9, wherein:
the movable platform includes an unmanned aerial vehicle (UAV) or an unmanned automobile that automatically moves according to a planned route.

11. The method according to claim 9, further comprising:
during a process of controlling the movable platform to move according to the planned flight route, controlling the movable platform to make a stop at a marked point in the planned flight route to perform a pre-determined operation corresponding to the target task.

12. The method according to claim 11, wherein:
the pre-determined operation includes a pesticide spraying operation.

13. The method according to claim 12, wherein:
the pesticide spraying operation includes a spraying operation circling around a designated point.

14. The method according to claim 1, wherein:
the target image data includes a color image; or
the target image data includes the color image and the depth data corresponding to the color image; or
the target image data includes an orthoimage; or
the target image data includes the orthoimage and the depth data corresponding to the orthoimage.

15. The method according to claim 2, further comprising, before processing the target image data based on the semantics recognition model:
obtaining a sample database, the sample database including sample image data;
generating an initial semantics recognition model based on a preset semantics recognition algorithm; and
training the initial semantics recognition model for optimization based on the sample image data in the sample database to obtain the semantics recognition model,
wherein the sample image data includes a sample image and semantics annotation information of the sample image, or the sample image data includes the sample image, the depth data corresponding to various pixels in the sample image, and the semantics annotation information of the sample image.

16. The method according to claim 15, wherein performing the training on the initial semantics recognition model for optimization based on the sample image data in the sample database to obtain the semantics recognition model includes:
invoking the initial semantics recognition model to recognize the sample image included in the sample image data and the depth data corresponding to various pixels in the sample image to obtain the recognition result; and
in response to a recognition result matching the semantics annotation information included in the sample image data, optimizing model parameters of the initial semantics recognition model to obtain the semantics recognition model.

17. An image processing method, comprising:
obtaining target image data, the target image data including a target image and depth data corresponding to various pixels in the target image;
processing the target image data to obtain a confidence level feature map of semantics of the target image data; and
based on the confidence level feature map, determining a quantity of target objects having an identical semantic type in the target image data.

18. The method according to claim 17, wherein determining the quantity of the target objects having the identical semantic type in the target image data based on the confidence level feature map includes:
classifying point data having different semantic types in the confidence level feature map based on a semantic type for each piece of point data in the confidence level feature map;
calculating the quantity of the point data having different semantic types in the confidence level feature map; and
determining the quantity of the point data having each of the different semantic types in the confidence level feature map to be the quantity of the target objects having the identical semantic type in the target image data.

19. The method according to claim 17, wherein processing the target image data to obtain the confidence level feature map of the semantics of the target image data includes:
processing the target image data based on a semantics recognition model to obtain a semantic type and a semantic confidence level of each pixel in the target image data;
generating point cloud data including the semantic type and the semantic confidence level based on position data and height data corresponding to the target image data, and the semantic type and the semantic confidence level of each pixel in the target image data; and
generating the confidence level feature map based on the point cloud data including the semantic type and the semantic confidence level.

20. The method according to claim 19, wherein:
the point cloud data and the confidence level feature map include a plurality of pieces of point data, each piece of point data including the position data, the height data, and multiple semantic types with different semantic confidence levels.

21. The method according to claim 20, further comprising after processing the target image data to obtain the confidence level feature map of the semantics of the target image data:
processing the confidence level feature map based on the semantic confidence level for each piece of point data in the confidence level feature map; and
updating the confidence level feature map based on a processing result

22. The method according to claim 21, wherein:
processing the confidence level feature map based on the semantic confidence level for each piece of point data in the confidence level feature map includes:
checking the semantic confidence level for each piece of point data in the confidence level feature map; and
deleting the corresponding piece of point data when the semantic confidence level in the confidence level feature map is smaller than or equal to a preset confidence level threshold; and
updating the confidence level feature map based on the processing result includes updating the confidence level feature map based on the point cloud data after the deletion process.

23. The method according to claim 17, wherein:
the target image data includes a color image; or
the target image data includes the color image and the depth data corresponding to the color image; or
the target image data includes an orthoimage; or
the target image data includes the orthoimage and the depth data corresponding to the orthoimage.

24. The method according to claim 19, further comprising before processing the target image data based on the semantics recognition model:
obtaining a sample database, the sample database including sample image data;
generating an initial semantics recognition model based on a preset semantics recognition algorithm; and
training the initial semantics recognition model for optimization based on the sample image data in the sample database to obtain the semantics recognition model,
wherein the sample image data includes a sample image and semantics annotation information of the sample image, or the sample image data includes the sample image, the depth data corresponding to various pixels in the sample image, and the semantics annotation information of the sample image.

25. The method according to claim 24, wherein performing the training on the initial semantics recognition model for optimization based on the sample image data in the sample database to obtain the semantics recognition model includes:
invoking the initial semantics recognition model to recognize the sample image included in the sample image data and the depth data corresponding to various pixels in the sample image to obtain the recognition result; and
in response to a recognition result matching the semantics annotation information included in the sample image data, optimizing model parameters of the initial semantics recognition model to obtain the semantics recognition model.

26. An image processing device, comprising:
a memory storing program instructions; and
a processor configured to execute the program instructions stored in the memory to:
obtain target image data, the target image data including a target image and depth data corresponding to various pixels in the target image;
process the target image data to obtain a confidence level feature map of semantics of the target image data; and
based on the confidence level feature map, determine a position of a target region in the target image data.

27. The device according to claim 26, when processing the target image data to obtain the confidence level feature map of the semantics of the target image data, the processor is further configured to:
process the target image data based on a semantics recognition model to obtain a semantic type and a semantic confidence level of each pixel in the target image data;
generate point cloud data including the semantic type and the semantic confidence level based on position data and height data corresponding to the target image data, and the semantic type and the semantic confidence level of each pixel in the target image data; and
generate the confidence level feature map based on the point cloud data including the semantic type and the semantic confidence level.

28. The device according to claim 27, wherein:
the point cloud data and the confidence level feature map include a plurality of pieces of point data, each piece of point data including the position data, the height data, and multiple semantic types with different semantic confidence levels.

29. The device according to claim 28, after processing the target image data to obtain the confidence level feature map of the semantics of the target image data, the processor is further configured to:
process the confidence level feature map based on the semantic confidence level for each piece of point data in the confidence level feature map; and
update the confidence level feature map based on a processing result

30. The device according to claim 29, wherein:
when processing the confidence level feature map based on the semantic confidence level for each piece of point data in the confidence level feature map, the processor is further configured to:
check the semantic confidence level for each piece of point data in the confidence level feature map; and
delete the corresponding piece of point data when the semantic confidence level in the confidence level feature map is smaller than or equal to a preset confidence level threshold; and
when updating the confidence level feature map based on the processing result, the processor is further configured to update the confidence level feature map based on the point cloud data after the deletion process.

31. The device according to claim 30, when determining the position of the target region in the target image data based on the confidence level feature image, the processor is further configured to:
obtain the position data and the semantic type for each piece of point data in the confidence level feature map;
determine an image region having an identical semantic type in the confidence level feature map based on the position data and the semantic type for each piece of point data in the confidence level feature map; and
determine the position data of the target region in the target image data based on the image region having the identical semantic type in the confidence level feature map

32. The device according to claim 31, after determining the position of the target region in the target image data based on the confidence level feature map, the processor is further configured to:
plan a flight route based on the position data of the target region and the semantic type in the target image data; and
control a movable platform to move according to a planned flight route.

33. The device according to claim 31, when planning the flight route based on the position data of the target region and the semantic type in the target image data, the processor is further configured to:
classify image regions with different semantic types based on the image regions with different semantic types in the confidence level feature map; and
plan the flight route corresponding to each of the image regions with different semantic types based on the image regions with different semantic types.

34. The device according to claim 32, when controlling the movable platform to move according to the planned flight route, the processor is further configured to:
when controlling the movable platform to move according to the planned flight route, determine whether the semantic type in the confidence level feature map corresponding to a current position of the movable platform matches the semantic type of a target task; and
in response to the determination result being positive, control the movable platform to perform the target task.

35. The device according to any of claims 32-34, wherein:
the movable platform includes an unmanned aerial vehicle (UAV) or an unmanned automobile that automatically moves according to a planned route

36. The device according to claim 34, the processor is further configured to:
when controlling the movable platform to move according to the planned flight route, control the movable platform to make a stop at a marked point in the planned flight route to perform a pre-determined operation corresponding to the target task.

37. The device according to claim 36, wherein:
the pre-determined operation includes a pesticide spraying operation.

38. The device according to claim 37, wherein:
the pesticide spraying operation includes a spraying operation circling around a designated point.

39. The device according to claim 26, wherein:
the target image data includes a color image; or
the target image data includes the color image and the depth data corresponding to the color image; or
the target image data includes an orthoimage; or
the target image data includes the orthoimage and the depth data corresponding to the orthoimage.

40. The device according to claim 27, before processing the target image data based on the semantics recognition model, the processor is further configured to:
obtain a sample database, the sample database including sample image data;
generate an initial semantics recognition model based on a preset semantics recognition algorithm; and
train the initial semantics recognition model for optimization based on the sample image data in the sample database to obtain the semantics recognition model,
wherein the sample image data includes a sample image and semantics annotation information of the sample image, or the sample image data includes the sample image, the depth data corresponding to various pixels in the sample image, and the semantics annotation information of the sample image.

41. The device according to claim 40, when performing the training on the initial semantics recognition model for optimization based on the sample image data in the sample database to obtain the semantics recognition model, the processor is further configured to:
invoke the initial semantics recognition model to recognize the sample image included in the sample image data and the depth data corresponding to various pixels in the sample image to obtain the recognition result; and
in response to a recognition result matching the semantics annotation information included in the sample image data, optimize model parameters of the initial semantics recognition model to obtain the semantics recognition model.

42. An image processing device, comprising:
a memory storing program instructions; and
a processor configured to execute the program instructions stored in the memory to:
obtain target image data, the target image data including a target image and depth data corresponding to various pixels in the target image;
process the target image data to obtain a confidence level feature map of semantics of the target image data; and
based on the confidence level feature map, determine a quantity of target objects having an identical semantic type in the target image data.

43. The device according to claim 42, when determining the quantity of the target objects having the identical semantic type in the target image data based on the confidence level feature map, the processor is further configured to:
classify point data having different semantic types in the confidence level feature map based on a semantic type for each piece of point data in the confidence level feature map;
calculate the quantity of the point data having different semantic types in the confidence level feature map; and
determine the quantity of the point data having each of the different semantic types in the confidence level feature map to be the quantity of the target objects having the identical semantic type in the target image data.

44. The device according to claim 42, when processing the target image data to obtain the confidence level feature map of the semantics of the target image data, the processor is further configured to:
process the target image data based on a semantics recognition model to obtain a semantic type and a semantic confidence level of each pixel in the target image data;
generate point cloud data including the semantic type and the semantic confidence level based on position data and height data corresponding to the target image data, and the semantic type and the semantic confidence level of each pixel in the target image data; and
generate the confidence level feature map based on the point cloud data including the semantic type and the semantic confidence level.

45. The device according to claim 44, wherein:
the point cloud data and the confidence level feature map include a plurality of pieces of point data, each piece of point data including the position data, the height data, and multiple semantic types with different semantic confidence levels.

46. The device according to claim 45, after processing the target image data to obtain the confidence level feature map of the semantics of the target image data, the processor is further configured to:
process the confidence level feature map based on the semantic confidence level for each piece of point data in the confidence level feature map; and
update the confidence level feature map based on a processing result

47. The device according to claim 46, wherein:
when processing the confidence level feature map based on the semantic confidence level for each piece of point data in the confidence level feature map, the processor is further configured to:
check the semantic confidence level for each piece of point data in the confidence level feature map; and
delete the corresponding piece of point data when the semantic confidence level in the confidence level feature map is smaller than or equal to a preset confidence level threshold; and
when updating the confidence level feature map based on the processing result, the processor is further configured to update the confidence level feature map based on the point cloud data after the deletion process.

48. The device according to claim 42, wherein:
the target image data includes a color image; or
the target image data includes the color image and the depth data corresponding to the color image; or
the target image data includes an orthoimage; or
the target image data includes the orthoimage and the depth data corresponding to the orthoimage.

49. The device according to claim 44, before processing the target image data based on the semantics recognition model, the processor is further configured to:
obtain a sample database, the sample database including sample image data;
generate an initial semantics recognition model based on a preset semantics recognition algorithm; and
train the initial semantics recognition model for optimization based on the sample image data in the sample database to obtain the semantics recognition model,
wherein the sample image data includes a sample image and semantics annotation information of the sample image, or the sample image data includes the sample image, the depth data corresponding to various pixels in the sample image, and the semantics annotation information of the sample image.

50. The device according to claim 49, when performing the training on the initial semantics recognition model for optimization based on the sample image data in the sample database to obtain the semantics recognition model, the processor is further configured to:
invoke the initial semantics recognition model to recognize the sample image included in the sample image data and the depth data corresponding to various pixels in the sample image to obtain the recognition result; and
in response to a recognition result matching the semantics annotation information included in the sample image data, optimize model parameters of the initial semantics recognition model to obtain the semantics recognition model.

51. A movable platform, comprising:
a propulsion system configured to supply a propulsion force to the movable platform; and
the imaging device according to any of claims 26-41.

52. A movable platform, comprising:
a propulsion system configured to supply a propulsion force to the movable platform; and
the imaging device according to any of claims 42-50.

53. An unmanned aerial vehicle, comprising:
a body;
a propulsion system disposed at the body and configured to supply a propulsion force; and
the imaging device according to any of claims 26-50.

54. A computer-readable medium storing a computer program, wherein:
when being executed by a processor, the computer program implements the method according to any of claims 1-25.
